(19) Europäisches Patentamt European Patent Office Office européen des brevets

(11) **EP 2 717 033 B1**

(12) **EUROPEAN PATENT SPECIFICATION**

(45) Date of publication and mention of the grant of the patent:
**12.12.2018 Bulletin 2018/50**

(51) Int Cl.:
***G01M 15/14*** *(2006.01)*

(21) Application number: **13187161.8**

(22) Date of filing: **02.10.2013**

(54) **Steam turbine performance test system and method usable with wet steam in turbine exhaust**

Dampfturbinenleistungstestsystem und Verfahren, das mit Nassdampf in Turbinenabgasen verwendbar ist

Système de test de performance de turbine à vapeur et procédé pouvant être utilisé avec de la vapeur humide dans l'échappement de la turbine

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2012 US 201213644141**

(43) Date of publication of application:
**09.04.2014 Bulletin 2014/15**

(73) Proprietor: **General Electric Company Schenectady, NY 12345 (US)**

(72) Inventor: **Tomaso, Christopher M. Schenectady, NY New York 12345 (US)**

(74) Representative: **Coric, Dragan et al General Electric Technology GmbH Global Patent Operation - Europe Brown Boveri Strasse 7 5400 Baden (CH)**

(56) References cited:
**US-A1- 2011 038 712      US-B1- 6 643 605**

**Description**

BACKGROUND

The disclosure relates generally to control of a power plant, and more particularly to determination of a performance characteristic of a steam turbine even when wet steam is present.

In power generation, it is common to use steam turbines and/or combined cycle power plants to generate electricity in a power system. Such power plants typically, for example, determine performance characteristics of the steam turbine to monitor for faults and/or to enhance power production. However, some operating conditions are not conducive to direct determination of steam turbine performance characteristics. In particular, steam turbine sections within certain configurations, such as those used in nuclear and concentrated solar installations, can result in exhaust conditions that are below the saturation line, resulting in wet steam at the exhaust. It is very difficult and/or expensive to measure section performance when wet steam is present since, historically, the performance of turbine sections with wet exhaust is determined using a radioactive tracer injection and sampling system. In addition to being expensive, the prior technique has a high uncertainty and is possibly dangerous.

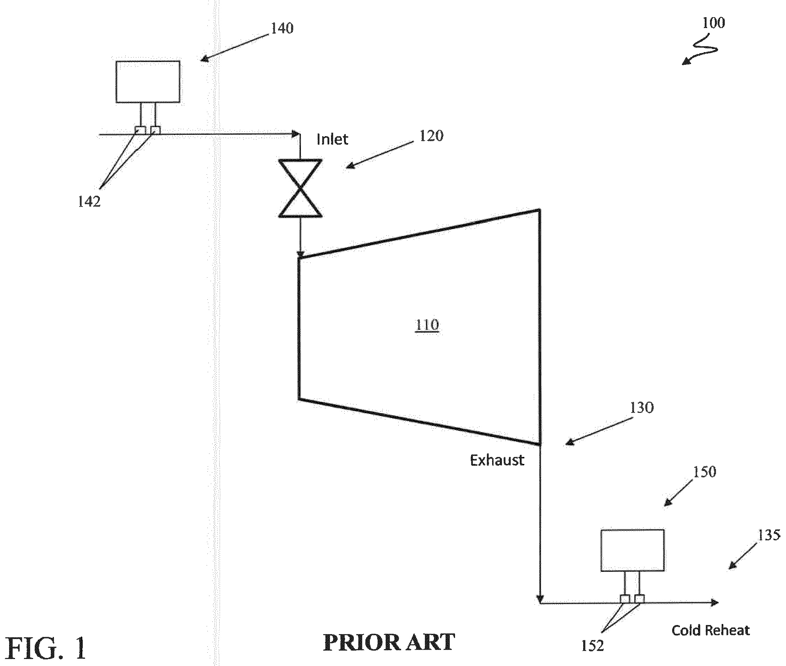

As seen in FIG. 1, a typical steam turbine section may include a turbine 110 having an inlet 120 and an exhaust 130. Performance of the steam turbine 110 when no wet exhaust is present may be determined based on measurements of pressure and temperature at turbine inlet 120 and exhaust 130 or cold reheat portion 135 of steam turbine section 100. For example, an inlet measurement station 140 including one or more sensors 142 and/or an exhaust measurement station 150 including one or more sensors 152 may be employed to measure pressure and temperature. Using such measurements, an inlet enthalpy $h_{Inet}$ may be determined at the particular inlet pressure and inlet temperature so that $h_{Inlet} = f(P_{Inlet}, T_{Inlet})$, such as by using well known steam tables and/or formulae and/or functions provided by the American Society of Mechanical Engineers (ASME), and where $P_{Inlet}$ is pressure of steam at inlet 120, and $T_{Inlet}$ is temperature of steam at exhaust 130. In addition, exhaust enthalpy $h_{Exhaust}$ may be determined from such measurements based on the ASME steam tables/functions so that $h_{Exhaust} = f(P_{Exhaust}, T_{Exhaust})$, where $P_{Exhaust}$ is pressure of steam at exhaust 150 and $T_{Exhaust}$ is temperature of steam at exhaust 150. Efficiency of steam turbine 110 may then be determined using the formula

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

where $h_{ps}$ signifies enthalpy at a particular pressure and entropy, in this case exhaust pressure, $P_{Exhaust}$, and inlet entropy, $s_{Inlet}$ signifies entropy at a particular pressure and enthalpy, in this case inlet pressure, $P_{Inlet}$, and inlet enthalpy, $h_{Inlet}$. Again, ASME steam tables/functions may be used, but, as temperature measurement in wet steam is not reliable, any parameters determined based on such a measurement would be suspect, and the formulae for enthalpy and efficiency can not be used for wet steam.

US 6,643,605 discloses a method and a device for determining an enthalpy of wet steam, in particular of wet steam at an outlet of a steam turbine. A part volume flow of the wet steam is mixed with a reference gas to form a mixture, so that the liquid constituents of the part volume flow evaporate completely. An enthalpy of the reference gas and an enthalpy of the mixture is then determined by measured physical variables and an enthalpy of the wet steam is calculated from these enthalpies. The mass flow ratio of the wet steam and the reference gas is fixed; a control possibility is not provided.

BRIEF DESCRIPTION

Embodiments of the invention disclosed herein may take the form of a steam turbine performance testing system having an exhaust bypass conduit arranged for selective fluid communication with an exhaust of the steam turbine so that the exhaust may receive a portion of an exhaust of the steam turbine as an exhaust bypass flow. In addition, an inlet bypass conduit may be arranged for selective fluid communication with an inlet of the steam turbine so that the inlet bypass conduit being may receive a portion of an inlet steam flow of the steam turbine as an inlet bypass flow. A mixed flow conduit may have a mixing point at one end that is in fluid communication with the exhaust bypass conduit and the inlet bypass conduit. The mixing point and the mixed flow conduit may be arranged to form a mixed flow responsive to the exhaust bypass flow and the inlet bypass flow entering the mixed flow conduit through the mixing point.

Embodiments of the invention may also take the form of a steam turbine including a turbine with an inlet and an exhaust, the inlet being arranged for connection to a steam supply. An inlet measurement station may be arranged to measure a characteristic in the inlet, and an exhaust measurement station may be arranged to measure a characteristic in the exhaust. In addition, an inlet bypass port may be provided at an inlet end of the turbine, and an inlet bypass conduit may be in fluid communication with the inlet bypass port. The inlet bypass conduit may be arranged to selectively allow inlet steam to enter the inlet bypass conduit to form an inlet bypass flow. An inlet bypass measurement station may be arranged to measure a characteristic in the inlet bypass conduit, and an exhaust bypass port may be provided at an exhaust end of the turbine. An exhaust bypass conduit may be in fluid communication with the exhaust bypass port and arranged to selectively allow exhaust steam to enter the exhaust bypass conduit to form an exhaust bypass flow. A mixed flow conduit in fluid communication with the inlet bypass conduit and the exhaust bypass conduit may be arranged to receive and allow mixing of the inlet bypass flow and the exhaust bypass flow at a mixing point to form a mixed flow. A mixed flow measurement station may be arranged to measure a characteristic in the mixed flow conduit, and a computing device may be in communication with and receiving measurements from the inlet measurement station, the exhaust measurement station, the inlet bypass measurement station, and the mixed flow measurement station. The computing device may further be arranged to determine an exhaust enthalpy of the steam turbine based at least in part on measurements received from the measurement stations.

Another embodiment may include a computer program product for enabling performance testing of a steam turbine, the steam turbine having an inlet and an exhaust, the computer program product comprising instructions in the form of computer executable code that when executed configures a computing device to determine at least an enthalpy, hMix, of a mixed flow formed from heating a portion of exhaust steam from the exhaust with a portion of inlet steam from the inlet at a mixing point. The computing device may also be configured to determine at least an enthalpy, hInlet, of the portion of the inlet steam and to establish a heat balance between the mixed flow on one side of the mixing point and the portion of exhaust steam and the portion of inlet steam on another side of the mixing point. The computing device may then be configured to determine an exhaust enthalpy, hExhaust, of the exhaust steam based at least in part on the heat balance.

Other aspects of the invention provide methods, systems, program products, and methods of using and generating each, which include and/or implement some or all of the actions described herein. The illustrative aspects of the invention are designed to solve one or more of the problems herein described and/or one or more other problems not discussed.

## BRIEF DESCRIPTION OF THE DRAWINGS

These and other features of the disclosure will be more readily understood from the following detailed description of the various aspects of the invention taken in conjunction with the accompanying drawings that depict various aspects of the invention.

FIG. 1 shows a schematic diagram of a conventional steam turbine section to which embodiments of the invention disclosed herein may be applied.

FIG. 2 shows a schematic diagram of a steam turbine section including a steam turbine performance test rig or system according to embodiments of the invention disclosed herein.

FIG. 3 shows a schematic flow diagram of a steam turbine performance testing method of according to embodiments of the invention disclosed herein.

FIG. 4 shows a schematic flow diagram of a method of operation of a steam turbine performance determination system according to embodiments of the invention disclosed herein.

FIG. 5 shows a schematic block diagram of a computing environment for implementing steam turbine performance determination according to embodiments of the invention disclosed herein.

It is noted that the drawings may not be to scale. The drawings are intended to depict only typical aspects of the invention, and therefore should not be considered as limiting the scope of the invention. In the drawings, like numbering represents like elements between the drawings.

The detailed description explains embodiments of the invention, together with advantages and features, by way of example with reference to the drawings.

## DETAILED DESCRIPTION OF THE INVENTION

Aspects of the invention provide a steam turbine performance determination system that enables relatively inexpensive performance testing of steam turbine sections with wet exhaust. By heating a sample of wet exhaust steam with a sample of inlet steam of known flow rate, pressure, and temperature to form a mixed flow, a heat balance may be taken across the intersection of the inlet steam and exhaust steam to provide an estimate of exhaust enthalpy. So long as the temperature in the mixed flow is higher than the saturation temperature at the pressure in the mixed flow, this estimate may then be used to determine an estimated efficiency of the steam turbine section.

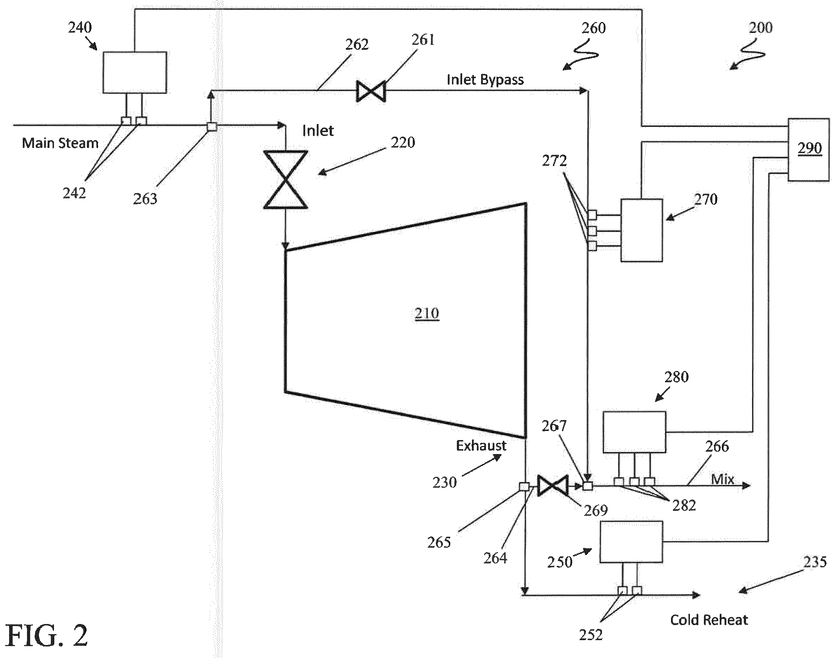

With reference to FIG. 2, a steam turbine section 200 may include a turbine 210 having an inlet 220 and an exhaust 230, as well as a cold reheat section 235, as in a typical steam section. An inlet measurement station 240 may measure a characteristic of steam flow through inlet 210, such as with one or more inlet sensors 242, and an exhaust measurement station 250 may measure a characteristic of steam flow through turbine section exhaust 230, such as with one or more exhaust sensors 252. In embodiments, inlet measurement station 240 and exhaust measurement station 250 may be configured to measure pressure and temperature at their respective locations to obtain an inlet pressure $P_{Inlet}$, an inlet temperature $T_{Inlet}$, an exhaust pressure $P_{Exhaust}$, and an exhaust temperature $T_{Exhaust}$, the values of which may be used to determine properties of the flow, such as enthalpy, heat content, entropy, and/or other properties and/or parameters as may be desired and/or appropriate, using well known thermodynamic relationships, such as the steam tables and/or functions and/or formulae provided by the American Society of Mechanical Engineers (ASME).

While conventional thermodynamic relationships, such as those provided by ASME, may be used to determine many of these properties and/or quantities, such relationships break down for exhaust enthalpy when wet steam is present in the exhaust. Embodiments provide a method of determining exhaust enthalpy even when wet steam is present at the exhaust, as will be described below.

In addition, embodiments may include a performance test rig or system 260 that may include an inlet bypass conduit 262 that may draw steam from inlet 210 to form an inlet bypass flow. Performance test rig 260 may additionally include an exhaust bypass conduit 264 that may draw steam from exhaust 230 to form an exit bypass flow. In embodiments, inlet bypass conduit 262 and exhaust bypass conduit 264 may intersect to form a mixed flow conduit 266 in which the inlet bypass flow and the exhaust bypass flow mix to form a mixed flow. The intersection of the inlet bypass conduit 262, the exhaust bypass conduit 264, and the mixed flow conduit 266 may be regarded as a mixing point 267 at which mixing of the inlet and exhaust bypass flows may begin to form a mixed flow. It should be understood that the inlet bypass flow represents a portion or sample of the inlet steam flow entering turbine 210 at or near inlet 220, while the exhaust bypass flow represents a portion or sample of the exhaust steam exiting steam turbine 210 at exhaust 230.

A bypass measurement station 270 may be arranged along inlet bypass conduit 262 to measure a characteristic of the inlet bypass flow, such as with one or more bypass sensors 272, and a mixed flow measurement station 280 may be arranged along mixed flow conduit 266 to measure a characteristic of the mixed flow, such as with one or more mixed flow sensors 282. In embodiments, bypass measurement station 270 may measure bypass flow pressure $P_{Bypass}$, temperature $T_{Bypass}$, and flow rate $Q_{Bypass}$, and mixed flow measurement station 280 may measure mixed flow pressure $P_{Mix}$, temperature $T_{Mix}$, and flow rate $Q_{Mix}$.

Performance test rig 260 in embodiments may be a temporary addition to steam turbine section 200. For example, steam turbine section 200 during normal operation may resemble that shown in FIG. 1, with test rig 260, including bypass conduits 262-266 and measurement stations 270, 280 absent, though an inlet bypass port 263 and an exhaust bypass port 265 may be included to facilitate attachment of test rig 260. In embodiments in which test rig 260 is temporary and includes bypass ports 263, 265, bypass ports 263, 265 may be sealed during normal operation of steam turbine section 200, such as with bolts, covers, and/or other suitable sealing devices. When a performance test is needed, bypass ports 263, 265 may be opened and respective bypass conduits 262, 264 may be attached. Embodiments may also include an inlet bypass valve 261 and an exhaust bypass valve 269 that may selectively allow passage of steam through inlet bypass port 263 and exhaust bypass port 265, respectively, into and/or through inlet bypass conduit 262 and exhaust bypass conduit 264. Steam turbine section 200 may then be operated, test rig 260 may be used to determine a performance of steam turbine section 200, steam turbine section 200 may be shut down, and test rig 260 may be removed. In embodiments, inlet and/or exhaust measurement stations 240, 250 may be part of test rig 260, while in other embodiments inlet and/or exhaust measurements stations 240, 250 may already be present as part of steam turbine section 200.

Whether or not performance test rig 260 is temporary, the information gathered by measurement stations 240, 250, 270, 280 may be used by a user to determine characteristics of flow at the respective locations, but in embodiments a computing device 290 may be provided and arranged to receive the information from any and/or all sensors 242, 252, 272, 282 of measurement stations 240, 250, 270, 280, respectively, to determine desired characteristics more rapidly. While known relationships may be employed to determine many characteristics of section 200 that may not be directly measured, embodiments provide a novel way to determine efficiency of section 200 when wet steam is present in the turbine exhaust. More specifically, during operation, inlet bypass conduit 262 may provide an inlet bypass flow of superheated steam that heats an exhaust bypass flow of wet exhaust from exhaust bypass conduit 264 to form a mixed flow of heated wet steam in mixed flow conduit 266. Exhaust enthalpy may then be determined using a heat balance around the mixing point, i.e. where the inlet bypass flow and exhaust bypass flow mix, such as at mixing point 267 at an intersection of inlet bypass conduit 262 and exhaust bypass conduit 264, to form the mixed bypass flow, based on measurements from measurement stations 240, 250, 270, 280, even when wet steam is present at the exhaust of the steam turbine. However, to ensure validity of the heat balance, the mixed flow temperature, $T_{Mix}$, should be higher than a saturation temperature of the mixed flow for the mixed flow pressure, $P_{Mix}$. The section exhaust enthalpy $h_{Exhaust}$ may then be used to determine a characteristic indicative of section performance, such as efficiency using the formula

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

in which $h_{Inlet} = f(P_{Inlet}, T_{Inlet})$, such as from ASME relationships, but in which $h_{Exhaust}$ is determined according to

$$h_{Exhaust} = \frac{\left(Q_{Mix} * h_{Mix}\right) - \left(Q_{Bypass} * h_{Bypass}\right)}{Q_{Mix} - Q_{Bypass}},$$

where $h_{Bypass} = f(P_{Bypass}, T_{Bypass})$ is inlet bypass flow enthalpy determined, for example, using ASME relationships, $h_{Mix} = f(P_{Mix}, T_{Mix})$ is mixed flow enthalpy determined, for example, using ASME relationships, $Q_{Mix}$ is flow rate of the mixed flow, and $Q_{Bypass}$ is flow rate of the inlet bypass flow. Embodiments thus are able to provide a measurement of steam turbine performance even when wet steam is present in the exhaust. While flow rate Q may be directly measured in embodiments, other embodiments may determine flow rate Q as a function of pressure, temperature, geometry of a flow measurement device, and/or pressure differential across a region in which flow rate is desired to be known, such as a flow measurement device. In any case, inlet bypass flow rate and exhaust bypass flow rate should be adjusted so that the mixed flow temperature, $T_{Mix}$, is higher than a saturation temperature of the mixed flow for the mixed flow pressure, $P_{Mix}$, to ensure a valid determination of exhaust enthalpy, $h_{Exhaust}$.

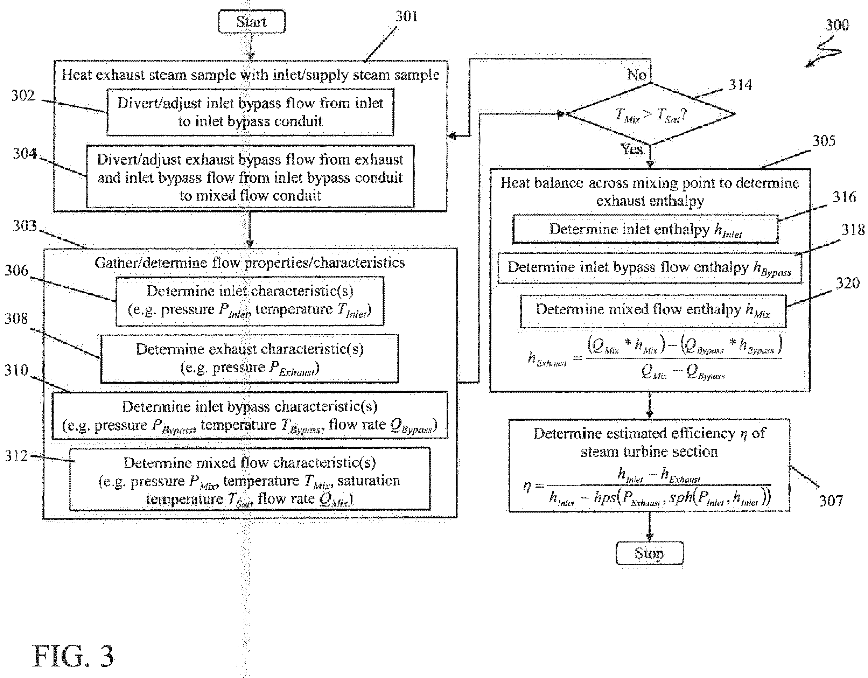

As seen in FIG. 3, a steam turbine performance testing method 300, such as may be conducted with steam turbine performance test rig 260, may broadly include heating an exhaust steam sample with an inlet and/or supply steam sample (block 301), gathering and/or determining flow properties and/or characteristics at various points in the steam turbine (block 303), and taking a heat balance across a mixing point of the exhaust and inlet/supply samples to determine exhaust enthalpy (block 305), which may then be used to determine an estimated efficiency of the steam turbine section (block 307). To heat an exhaust steam sample with an inlet/supply steam sample (block 301), embodiments may, for example, divert an inlet bypass flow from the inlet to an inlet bypass conduit (block 302), such as inlet bypass conduit 262, and divert an exhaust bypass flow and the inlet bypass flow to a mixed flow conduit (block 304), the intersection of the inlet and exhaust flows comprising a mixing point. A mixed flow may form in the mixed flow conduit and comprises the heated exhaust steam sample.

To gather and/or determine flow properties and/or characteristics (block 303) embodiments may employ one or more measurement stations 240, 250, 270, 280 each including one or more sensors 242, 252, 272, 282 as illustrated in FIG. 2 and discussed above. Characteristics that could be measured include pressure, temperature, and/or flow rate, though sensors could be included to measure any characteristic desired and/or appropriate. Thus, embodiments may determine one or more inlet characteristics (block 306), such as by measuring and/or otherwise obtaining inlet pressure $P_{Inlet}$ and/or inlet temperature $T_{Inlet}$, and determine one or more exhaust characteristics (block 308), such as by measuring and/or otherwise obtaining exhaust pressure $P_{Exhaust}$). Embodiments may further determine one or more characteristics in the inlet bypass conduit (block 310), through which an inlet bypass flow should pass when the turbine is running, and one or more characteristics in the mixed flow conduit (block 312), through which a mixed flow should pass when the turbine is running as a result of the confluence and/or mixing of the exhaust bypass flow and the inlet bypass flow. Examples of inlet bypass characteristics that could be measured include, for example, as suggested above, pressure, $P_{Bypass}$, $P_{Mix}$, temperature, $T_{Bypass}$, $T_{Mix}$, and flow rate, $Q_{Bypass}$, $Q_{Mix}$.

To ensure that the heat balance of block 305 is valid, embodiments check to see whether the temperature of the mixed flow, $T_{Mix}$, is greater than a saturation temperature, $T_{Sat}$, for the mixed flow pressure, $P_{Mix}$ (block 314). If $T_{Mix}$ is greater than $T_{Sat}$, then the heat balance may be taken (block 305). However, if $T_{Mix}$ is less than or equal to $T_{Sat}$ then the heating of the exhaust steam sample must be adjusted (block 301), such as by adjusting the inlet bypass flow (block 302) and/or adjusting the exhaust bypass flow (block 304).

Some or all of the flow properties and/or characteristics gathered may be used to take the heat balance to determine exhaust enthalpy (block 305). For example, embodiments may determine an inlet enthalpy, $h_{Inlet}$ (block 316), and determine an inlet bypass flow enthalpy, $h_{Bypass}$ (block 318), as part of a first side of the heat balance, and/or may determine a mixed flow enthalpy, $h_{Mix}$, (block 320), as part of a second side of the heat balance. For example, these enthalpies may be determined with ASME relationships using gathered/determined properties, such as temperature, pressure, flow rate, and entropy. Embodiments may then solve the heat balance for exhaust enthalpy, $h_{Exhaust}$, such as by using the relationship

$$h_{Exhaust} = \frac{\left(Q_{Mix} * h_{Mix}\right) - \left(Q_{Bypass} * h_{Bypass}\right)}{Q_{Mix} - Q_{Bypass}} .$$

Determining exhaust enthalpy according to embodiments provides substantially accurate values even when wet steam is present in the exhaust, such as in steam turbines associated with nuclear power installations, focused solar power installations, and/or other lower-temperature steam generating facilities. Once exhaust enthalpy, $h_{Exhaust}$, is determined, a performance characteristic, such as efficiency, may be determined for the turbine (block 307) using the relationship described above.

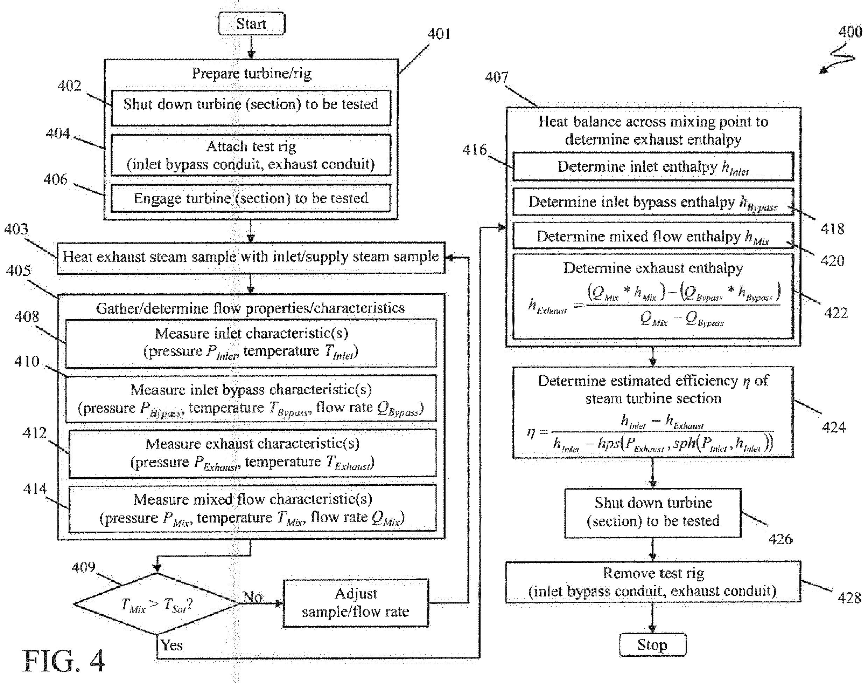

As seen in FIG. 4, embodiments may include a method of operation 400 of performance test rig or system 260 which may include preparing a turbine and/or test rig (block 401) for performance testing so that an exhaust steam sample may be heated with an inlet and/or supply steam sample (block 403). During testing, flow properties and/or characteristics may be gathered (block 405) so that a heat balance may be taken across a mixing point of the exhaust and inlet/supply steam samples (block 407) to find exhaust enthalpy, $h_{Exhaust}$. Embodiments may determine an estimated efficiency of the steam turbine (section) using the exhaust enthalpy and other properties, such as by using the relationship described above. To ensure that the heat balance of block 407 is valid, embodiments may check to see whether the temperature of the mixed flow, $T_{Mix,}$ is greater than a saturation temperature, $T_{Sat}$, for the mixed flow pressure, $P_{Mix}$ (block 409). If $T_{Mix}$ is greater than $T_{Sat}$, then the heat balance may be taken (block 407). However, if $T_{Mix}$ is less than or equal to $T_{Sat}$, then the heating of the exhaust steam sample must be adjusted (block 403), such as by adjusting the inlet bypass flow and/or adjusting the exhaust bypass flow.

In embodiments, preparing the turbine and/or test rig (block 401) may include shutting down a turbine to be tested (block 402) so that performance test rig or system 260 may be attached (block 404). The turbine may then be engaged (block 406) and heating of an exhaust steam sample with an inlet/supply steam sample (block 403) may proceed. In addition, to gather and/or determine flow properties and/or characteristics (block 405), an inlet condition(s) and/or characteristic(s) may be measured (block 408), such as by measuring inlet pressure $P_{Inlet}$ and/or inlet temperature $T_{Inlet}$. Embodiments may further measure a characteristic of inlet bypass conduit 262 (block 410), through which an inlet bypass flow should pass when the turbine is running, as well as a characteristic of the turbine exhaust (block 412) and of mixed flow conduit 266 (block 414). Such measurements may be taken, for example, using one or more sensors 242, 252, 272, 282 of one or more measurement stations 240, 250, 270, 280 described above. Characteristics that could be measured include pressure, temperature, and/or flow rate, though sensors could be included to measure any characteristic desired and/or appropriate. Some or all of the measurements may be used in taking a heat balance (block 407), such as to determine inlet enthalpy, $h_{Inlet}$ (block 416), inlet bypass enthalpy, $h_{Bypass}$ (block 418), and/or mixed flow enthalpy, $h_{Mix}$ (block 420), which may be used to determine exhaust enthalpy, $h_{Exhaust}$ (block 422), even with wet steam present in the exhaust, such as by using the relationships described above. Once exhaust enthalpy is determined, a performance characteristic, such as efficiency, may be determined for the turbine (block 424), such as by using the relationship described above, the turbine may be shut down (block 426), and performance test rig or system 260 may be removed (block 428).

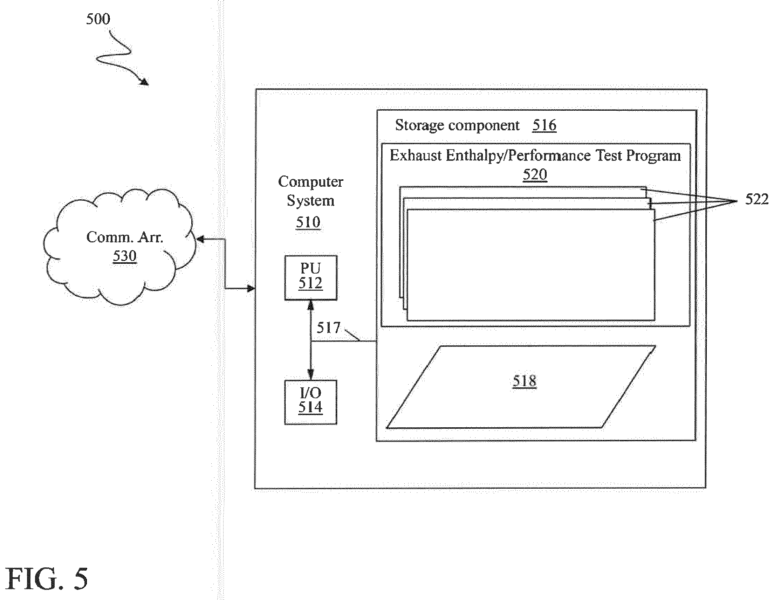

Turning to FIG. 5, an illustrative environment 500 for a steam turbine performance test computer program product is schematically illustrated according to an embodiment of the invention. To this extent, environment 500 includes a computer system 510, such as computing device 290 seen in FIG. 2 and/or other computing device that may be part of a steam turbine and/or a control system therefor that may perform a process described herein in order to execute a steam turbine performance testing method, such as method 300 shown in FIG. 3, and/or a steam turbine performance test rig operating method, such as method 400 shown in FIG. 4, according to embodiments. In particular, computer system 510 is shown including a steam turbine performance test program 520, which makes computer system 510 operable to manage data in a steam turbine performance test control system or controller by performing a process described herein, such as an embodiment of the method 300 and/or method 400 discussed above.

Computer system 510 is shown including a processing component or unit (PU) 512 (e.g., one or more processors), an input/output (I/O) component 514 (e.g., one or more I/O interfaces and/or devices), a storage component 516 (e.g., a storage hierarchy), and a communications pathway 517. In general, processing component 512 executes program code, such as steam turbine performance test program 520, which is at least partially fixed in storage component 516, which may include one or more computer readable storage medium or device. While executing program code, processing component 512 may process data, which may result in reading and/or writing transformed data from/to storage component 516 and/or I/O component 514 for further processing. Pathway 517 provides a communications link between each of the components in computer system 510. I/O component 514 may comprise one or more human I/O devices, which enable a human user to interact with computer system 510 and/or one or more communications devices to enable a system user to communicate with computer system 510 using any type of communications link. In addition, I/O component 514 may include one or more sensors, such as any or all of sensors 242, 252, 272, 282 discussed above. In embodiments, a communications arrangement 530, such as networking hardware/software, enables computing device 510 to communicate with other devices in and outside of a node in which it is installed. To this extent, steam turbine performance test program 520 may manage a set of interfaces (e.g., graphical user interface(s), application program interface, and/or the like) that enable human and/or system users to interact with steam turbine performance test program 520. Further, steam turbine performance test program 520 may manage (e.g., store, retrieve, create, manipulate, organize, present, etc.) data, such as steam turbine performance test data 518, using any solution. In embodiments, data may be received from one or more sensors, such as any or all of measurement stations 240, 250, 270, 280 and/or one or more of sensors 242, 252, 272, 282 thereof discussed above.

Computer system 510 may comprise one or more general purpose computing articles of manufacture (e.g., computing devices) capable of executing program code, such as steam turbine performance test program 520, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. Additionally, computer code may include object code, source code, and/or executable code, and may form part of a computer program product when on at least one computer readable medium. It is understood that the term "computer readable medium" may comprise one or more of any type of tangible medium of expression, now known or later developed, from which a copy of the program code may be perceived, reproduced, or otherwise communicated by a computing device. For example, the computer readable medium may comprise: one or more portable storage articles of manufacture, including storage devices; one or more memory/storage components of a computing device; paper; and/or the like. Examples of memory/storage components and/or storage devices include magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other tangible computer readable storage medium now known and/or later developed and/or discovered on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments.

A technical effect of the executable instructions is to implement a steam turbine performance test method and/or system and/or computer program product that uses a performance test rig or system to monitor and measure a performance characteristic of a steam turbine that may develop wet steam in its exhaust. The steam turbine performance test rig or system may determine an exhaust enthalpy of a turbine based on measurements taken at the turbine inlet, the turbine exhaust, of an inlet bypass flow drawn off the main or inlet steam at or before the inlet, and a mixed flow produced by mixing the bypass flow with an exhaust bypass flow drawn at or just after the turbine exhaust. By heating the exhaust bypass flow with the inlet bypass flow in this fashion, wet steam may be converted to dry steam whose properties may then be measured and/or determined much more easily.

The computer program code may be written in computer instructions executable by the controller, such as in the form of software encoded in any programming language. Examples of suitable computer instruction and/or programming languages include, but are not limited to, assembly language, Verilog, Verilog HDL (Verilog Hardware Description Language), Very High Speed IC Hardware Description Language (VHSIC HDL or VHDL), FORTRAN (Formula Translation), C, C++, C#, Java, ALGOL (Algorithmic Language), BASIC (Beginner All-Purpose Symbolic Instruction Code), APL (A Programming Language), ActiveX, Python, Perl, php, Tcl (Tool Command Language), HTML (HyperText Markup Language), XML (extensible Markup Language), and any combination or derivative of one or more of these and/or others now known and/or later developed and/or discovered. To this extent, steam turbine performance test program 520 may be embodied as any combination of system software and/or application software.

Further, steam turbine performance test program 520 may be implemented using a set of modules 522. In this case, a module 522 may enable computer system 510 to perform a set of tasks used by steam turbine performance test program 520, and may be separately developed and/or implemented apart from other portions of steam turbine performance test program 520. As used herein, the term "component" means any configuration of hardware, with or without software, which implements the functionality described in conjunction therewith using any solution, while the term "module" means program code that enables a computer system 510 to implement the actions described in conjunction therewith using any solution. When fixed in a storage component 516 of a computer system 510 that includes a processing component 512, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computer system 510.

When computer system 510 comprises multiple computing devices, each computing device may have only a portion of steam turbine performance test program 520 fixed thereon (e.g., one or more modules 522). However, it is understood that computer system 510 and steam turbine performance test program 520 are only representative of various possible equivalent computer systems that may perform a process described herein. To this extent, in other embodiments, the functionality provided by computer system 510 and steam turbine performance test program 520 may be at least partially implemented by one or more computing devices that include any combination of general and/or specific purpose hardware with or without program code. In each embodiment, the hardware and program code, if included, may be created using standard engineering and programming techniques, respectively.

Regardless, when computer system 510 includes multiple computing devices, the computing devices may communicate over any type of communications link. Further, while performing a process described herein, computer system 510 may communicate with one or more other computer systems using any type of communications link. In either case, the communications link may comprise any combination of various types of wired and/or wireless links; comprise any combination of one or more types of networks; and/or utilize any combination of various types of transmission techniques and protocols now known and/or later developed and/or discovered.

As discussed herein, steam turbine performance test program 520 enables computer system 510 to implement a steam turbine performance test product and/or method, such as that shown schematically in FIG. 3, and/or a steam turbine performance test rig operation product and/or method, such as that shown schematically in FIG. 4. Computer system 510 may obtain steam turbine performance test data 518 using any solution. For example, computer system 510 may generate and/or be used to generate steam turbine performance test data 518, retrieve steam turbine performance test data 518 from one or more data stores, receive steam turbine performance test data 518 from another system or device, such as one or more of sensors 242, 252, 272, 282, in or outside of a steam turbine performance test system, and/or the like.

In another embodiment, the invention provides a method of providing a copy of program code, such as steam turbine performance test program 520 (FIG. 5), which implements some or all of a process described herein, such as those shown schematically in and described with reference to FIGS. 3 and 4. In this case, a computer system may process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one tangible computer readable medium. In either case, the set of data signals may be transmitted/received using any type of communications link.

In still another embodiment, the invention provides a method of generating a system for implementing a steam turbine performance test product and/or method, and/or a steam turbine performance test rig operation product and/or method. In this case, a computer system, such as computer system 510 (FIG. 5), can be obtained (e.g., created, maintained, made available, etc.), and one or more components for performing a process described herein can be obtained (e.g., created, purchased, used, modified, etc.) and deployed to the computer system. To this extent, the deployment may comprise one or more of: (1) installing program code on a computing device; (2) adding one or more computing and/or I/O devices to the computer system; (3) incorporating and/or modifying the computer system to enable it to perform a process described herein; and/or the like.

Various aspects and embodiments of the present invention are defined by the following number clauses:

1. A steam turbine performance testing system including:

an exhaust bypass conduit arranged for selective fluid communication with an exhaust of the steam turbine, the exhaust bypass conduit being arranged to receive a portion of an exhaust of the steam turbine as an exhaust bypass flow;

an inlet bypass conduit arranged for selective fluid communication with an inlet of the steam turbine, the inlet bypass conduit being arranged to receive a portion of an inlet steam flow of the steam turbine as an inlet bypass flow; and

a mixed flow conduit having a mixing point at one end in fluid communication with the exhaust bypass conduit and the inlet bypass conduit, the mixing point and the mixed flow conduit being arranged to form a mixed flow responsive to the exhaust bypass flow and the inlet bypass flow entering the mixed flow conduit through the mixing point.

2. The steam turbine performance testing system of clause, further comprising:

a sensor deployed to measure at least one characteristic of each of the exhaust bypass flow, the inlet bypass flow, and the mixed flow; and

a computing device in communication with the sensor and configured to determine an exhaust enthalpy of the steam turbine based at least in part on a heat balance across the mixing point using at least one measured value from the sensor, a first side of the heat balance including the inlet bypass flow and the exhaust bypass flow, and a second side of the heat balance including the mixed flow.

3. The steam turbine performance testing system of clause 1 or 2, wherein the computing device further determines a performance characteristic of the steam turbine using the stored exhaust enthalpy value.

4. The steam turbine performance testing system of any preceding clause, wherein the at least one characteristic includes at least one of flow rate, pressure, or temperature.

5. The steam turbine performance testing system of any preceding clause, wherein the at least one characteristic includes an inlet pressure $P_{Inlet}$, an inlet temperature $T_{Inlet}$, an exhaust pressure $P_{Exhaust}$, an inlet bypass pressure $P_{Bypass}$, an inlet bypass temperature $T_{Bypass}$, an inlet bypass flow rate $Q_{Bypass}$, a mixed flow pressure $P_{Mix}$, a mixed flow temperature $T_{Mix}$, and a mixed flow rate $Q_{Mix}$.

6. The steam turbine performance testing system of any preceding clause, wherein the exhaust enthalpy is at least partly determined using the relationship

$$h_{Exhaust} = \frac{(Q_{Mix} * h_{Mix}) - (Q_{Bypass} * h_{Bypass})}{Q_{Mix} - Q_{Bypass}}$$

where $h_{Bypass}$ is the enthalpy of the inlet bypass flow, $h_{Mix}$ is the enthalpy of the mixed flow, $Q_{Mix}$ is flow rate of the mixed flow, and $Q_{Bypass}$ is flow rate of the inlet bypass flow.

7. The steam turbine performance testing system of any preceding clause, wherein the sensor is part of at least one of an inlet bypass measurement station or a mixed flow measurement station, in which the sensor is included.

8. The steam turbine performance testing system of any preceding clause, wherein the computing device receives a measurement of a characteristic of at least one of the inlet of the steam turbine or the exhaust of the steam turbine.

9. A steam turbine comprising:

a turbine having an inlet and an exhaust, the inlet being arranged for connection to a steam supply;
an inlet measurement station arranged to measure a characteristic in the inlet;
an exhaust measurement station arranged to measure a characteristic in the exhaust;
an inlet bypass port at an inlet end of the turbine;
an inlet bypass conduit in fluid communication with the inlet bypass port and arranged to selectively allow inlet steam to enter the inlet bypass conduit to form an inlet bypass flow;
an inlet bypass measurement station arranged to measure a characteristic in the inlet bypass conduit;
an exhaust bypass port at an exhaust end of the turbine;
an exhaust bypass conduit in selective fluid communication with the exhaust bypass port and arranged to selectively allow exhaust steam to pass from the exhaust into the exhaust bypass conduit to form an exhaust bypass flow;
a mixed flow conduit in fluid communication with the inlet bypass conduit and the exhaust bypass conduit at a mixing point of the mixed flow conduit, the mixed flow conduit thereby being arranged to receive and allow mixing of an inlet bypass flow and an exhaust bypass flow to form a mixed flow;
a mixed flow measurement station arranged to measure a characteristic in the mixed flow conduit; and
a computing device in communication with and receiving measurements from at least the inlet bypass measurement station and the mixed flow measurement station, the computing device being arranged to determine an exhaust enthalpy of the steam turbine based at least in part on measurements received from the measurement stations.

10. The steam turbine of any preceding clause, wherein the selective passage of steam through at least one of the inlet bypass port or the exhaust bypass port is controlled at least in part by a respective valve.

11. The steam turbine performance testing system of any preceding clause, wherein the computing device determines the exhaust enthalpy of the turbine according to the relationship

$$h_{Exhaust} = \frac{(Q_{Mix} * h_{Mix}) - (Q_{Bypass} * h_{Bypass})}{Q_{Mix} - Q_{Bypass}}$$

where $h_{Mix}$ is the enthalpy of the mixed flow, $h_{Bypass}$ is the enthalpy of the inlet bypass flow, $Q_{Mix}$ is flow rate of the mixed flow, and $Q_{Bypass}$ is flow rate of the inlet bypass flow.

12. The steam turbine performance testing system of any preceding clause, wherein the performance characteristic determined by the computing device is an efficiency of the turbine and the efficiency is determined according to the relationship

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

in which $h_{Inlet} = f(P_{Inlet}, T_{Inlet})$, the inlet measurement station measures at least an inlet pressure $P_{Inlet}$ and an inlet temperature $T_{Inlet}$, and the exhaust measurement station measures at least an exhaust pressure $P_{Exhaust}$.

13. A computer program product for enabling performance testing of a steam turbine, the steam turbine having an inlet and an exhaust, the computer program product comprising instructions in the form of computer executable code that when executed configures a computing device to:

determine at least an enthalpy, $h_{Mix}$, of a mixed flow formed from heating a portion of exhaust steam from the exhaust with a portion of inlet steam from the inlet at a mixing point;
determine at least an enthalpy, $h_{Inlet}$, of the portion of the inlet steam;
establish a heat balance between the mixed flow on one side of the mixing point and the portion of exhaust steam and the portion of inlet steam on another side of the mixing point; and
determine an exhaust enthalpy, $h_{Exhaust}$, of the exhaust steam based at least in part on the heat balance.

14. The computer program product of any preceding clause, wherein, to establish the heat balance, the computing device is further configured to:

determine an inlet bypass flow enthalpy, $h_{Bypass}$, of the portion of inlet steam;
determine an inlet bypass flow rate, $Q_{Bypass}$, of the portion of inlet steam;
determine a flow rate, $Q_{Mix}$, of the mixed flow; and
determine the exhaust enthalpy, $h_{Exhaust}$, using the relationship

$$h_{Exhaust} = \frac{(Q_{Mix} * h_{Mix}) - (Q_{Bypass} * h_{Bypass})}{Q_{Mix} - Q_{Bypass}}.$$

15. The computer program product of any preceding clause, wherein to determine at least one of the inlet bypass flow enthalpy or the mixed flow enthalpy, the computing device is further configured to measure temperature and pressure of the respective flow.

16. The computer program product of any preceding clause, wherein to determine at least one of the inlet bypass flow rate or the mixed flow rate, the computing device is further configured to measure temperature $T_{Bypass}$ or $T_{Mix}$ and pressure $P_{Bypass}$ or $P_{Mix}$ of the respective flow and to use a relationship between pressure, temperature, and flow rate.

17. The computer program product of any preceding clause, wherein the computing device is further configured to determine a performance characteristic of the steam turbine using the exhaust enthalpy.

18. The computer program product of any preceding clause, wherein the performance characteristic is efficiency $\eta$ and the computing device is further configured to determine efficiency according to the relationship

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

in which $h_{ps}$ represents enthalpy at a particular pressure and entropy, and $s_{Inlet}$ represents entropy at inlet pressure, $P_{Inlet}$, and inlet enthalpy, $h_{Inlet}$.

19. The computer program product of any preceding clause, wherein the computer program product is configured to receive information from a performance testing system, the information including at least one characteristic of each of the mixed flow and the portion of the inlet steam, the performance testing system being arranged for selective installation on the steam turbine and including:

an inlet bypass conduit arranged to selectively divert the portion of the inlet steam from the inlet to form an inlet bypass flow;
an exhaust bypass conduit arranged to selectively divert the portion of the exhaust steam from the exhaust to form an exhaust bypass flow;
a mixed flow conduit including a mixing point in fluid communication with the inlet bypass conduit and the exhaust bypass conduit such that the inlet bypass flow and the exhaust bypass flow mix to form the mixed flow and to heat the exhaust bypass flow with the inlet bypass flow; and
a sensor deployed to measure a respective characteristic of each of the inlet bypass flow and the mixed flow, each respective sensor being arranged for communication with the computing device to send the measured characteristics to the computing device.

**Claims**

1. A steam turbine (210) performance testing system (260) including:

an exhaust bypass conduit (264) arranged for selective fluid communication with an exhaust (230) of the steam turbine (210), the exhaust bypass conduit being arranged to receive a portion of an exhaust of the steam turbine as an exhaust bypass flow;
an inlet bypass conduit (262) arranged for selective fluid communication with an inlet (220) of the steam turbine, the inlet bypass conduit being arranged to receive a portion of an inlet steam flow of the steam turbine as an inlet bypass flow;
at least one of an inlet measurement station and an inlet bypass measurement station;
a mixed flow conduit (266) having a mixing point (267) at one end in fluid communication with the exhaust bypass conduit and the inlet bypass conduit, the mixing point and the mixed flow conduit being arranged to form a mixed flow responsive to the exhaust bypass flow and the inlet bypass flow entering the mixed flow conduit through the mixing point; and
a mixed flow measurement station (280) for measuring a mixed flow pressure $P_{Mix}$, a mixed flow temperature $T_{Mix}$, and a mixed flow rate $Q_{Mix}$;
**characterized in that** a mixed flow temperature control block (314) is provided to ensure that the temperature of the mixed flow, $T_{Mix}$, is greater than a saturation temperature, $T_{Sat}$, for the mixed flow pressure, $P_{Mix}$ by adjusting the inlet bypass flow and/or adjusting the exhaust bypass flow, wherein the mixed flow temperature control block is configured to adjust the heating of the exhaust steam sample if the temperature of the mixed flow, $T_{Mix}$, is less than or equal to the saturation temperature, $T_{Sat}$, such as by adjusting at least one of the inlet bypass flow and/or the exhaust bypass flow.

2. The steam turbine performance testing system (210) of claim 1, further comprising:

a computing device, wherein the computing device is in communication with and to receive at least one measured characteristic from at least one measurement station (240, 270) deployed to measure at least one characteristic of the inlet bypass flow and with the mixed flow measurement station (280) deployed to measure at least one characteristic of the mixed flow,
wherein the computing device is configured to determine an exhaust enthalpy of the steam turbine (210) based at least in part on a heat balance across the mixing point (267) using at least one measured characteristic from the measurement stations, a first side of the heat balance including the at least one characteristic of the inlet bypass flow, and a second side of the heat balance including the at least one characteristic of the mixed flow.

3. The steam turbine performance testing system (260) of the preceding claim 2, wherein the computing device further is adapted and configured to determine a performance characteristic of the steam turbine (210) using the exhaust enthalpy value.

4. The steam turbine performance testing system (260) of either of claims 2 or 3, wherein the at least one characteristic includes at least one of flow rate, pressure, or temperature.

5. The steam turbine testing system (260) of any of the preceding claims, comprising an inlet bypass valve (261) provided in the inlet bypass conduit (262) and an outlet bypass valve (269) provided in the exhaust bypass conduit (264), the bypass valves provided and configured to control the selective passage of steam through the inlet bypass conduit and the exhaust bypass conduit.

6. A method for operating the performance test system (260) of any of the preceding claims, the method comprising bypassing an exhaust (230) steam sample through the exhaust bypass conduit, bypassing an inlet (220) steam sample through the inlet bypass conduit (262), mixing the exhaust steam sample and the inlet steam sample at a mixing point (267) of a bypass conduit (266) thus providing a mixed flow in the bypass conduit, and measuring a mixed flow pressure $P_{Mix}$, a mixed flow temperature $T_{Mix}$, and a mixed flow rate $Q_{Mix.}$;
**characterized in** ensuring that the temperature of the mixed flow, $T_{Mix}$, is greater than a saturation temperature, $T_{Sat}$, for the mixed flow pressure, $P_{Mix}$ by adjusting the inlet bypass flow and/or adjusting the exhaust bypass flow.

7. The method according to the preceding claim, **characterized in that** a computing device receives at least one measured characteristic from at least one measurement station (240, 270) deployed to measure at least one characteristic of the inlet bypass flow and from the mixed flow measurement station (280) deployed to measure at least one characteristic of the mixed flow, and the computing device further determines an exhaust enthalpy of the steam turbine (210) based at least in part on a heat balance across the mixing point (267) using at least one measured characteristic from the measurement stations, a first side of the heat balance including the at least one characteristic of the inlet bypass flow, and a second side of the heat balance including the at least one characteristic of the mixed flow.

8. The method according to the preceding claim, wherein the computing device determines the exhaust enthalpy of the turbine according to the relationship

$$h_{Exhaust} = \frac{(Q_{Mix} * h_{Mix}) - (Q_{Bypass} * h_{Bypass})}{Q_{Mix} - Q_{Bypass}}$$

where $h_{Mix}$ is the enthalpy of the mixed flow, $h_{Bypass}$ is the enthalpy of the inlet bypass flow, $Q_{Mix}$ is flow rate of the mixed flow, and $Q_{Bypass}$ is flow rate of the inlet bypass flow.

9. The method according to the preceding claim, wherein the computing device calculates an efficiency of the turbine and the efficiency is determined according to the relationship

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

in which $h_{Inlet} = f(P_{Inlet}, T_{Inlet})$, the inlet measurement station measures at least an inlet pressure $P_{Inlet}$ and an inlet temperature $T_{Inlet}$, and the exhaust measurement station measures at least an exhaust pressure $P_{Exhaust}$.

10. A steam turbine (210) comprising:

    a turbine having an inlet (220) and an exhaust (230), the inlet being arranged for connection to a steam supply;
    an inlet measurement station (240) arranged to measure a characteristic in the inlet;
    an exhaust measurement station (250) arranged to measure a characteristic in the exhaust;
    an inlet bypass port at an inlet end of the turbine; and

an exhaust bypass port at an exhaust end of the turbine;

**characterized in** further comprising a steam turbine performance testing system (260) in accordance with any of the preceding claims claiming a steam turbine performance testing system;

wherein the inlet bypass conduit (262) of the performance testing system (260) is in fluid communication with the inlet bypass port and arranged to selectively allow inlet steam to enter the inlet bypass conduit to form an inlet bypass flow;

wherein the exhaust bypass conduit (264) of the performance testing system (260) is in selective fluid communication with the exhaust bypass port and arranged to selectively allow exhaust steam to pass from the exhaust into the exhaust bypass conduit to form an exhaust bypass flow;

and in further comprising a computing device in communication with and receiving measurements from at least the inlet bypass measurement station (270) of the performance testing system (260) and the mixed flow measurement station (280) of the performance testing system (260), the computing device being arranged to determine an exhaust enthalpy of the steam turbine based at least in part on measurements received from the measurement stations.

11. A computer program product for enabling performance testing of a steam turbine (210) according to claim 10, the steam turbine having an inlet (220) and an exhaust (230), the computer program product comprising instructions in the form of computer executable code that when executed configures a computing device to:

determine at least an enthalpy, $h_{Mix}$, of a mixed flow formed from heating a portion of exhaust steam from the exhaust with a portion of inlet steam from the inlet at a mixing point (267);

determine at least an enthalpy, $h_{Inlet}$, of the portion of the inlet steam;

establish a heat balance between the mixed flow on one side of the mixing point and the portion of exhaust steam and the portion of inlet steam on another side of the mixing point; and

determine an exhaust enthalpy, $h_{Exhaust}$, of the exhaust steam based at least in part on the heat balance and further to ensure that the temperature of the mixed flow, $T_{Mix}$, is greater than a saturation temperature, $T_{Sat}$, for the mixed flow pressure, $P_{Mix}$ by adjusting the inlet bypass flow and/or adjusting the exhaust bypass flow..

12. The computer program product of the preceding claim, wherein, to establish the heat balance, the computing device is further configured to:

determine an inlet bypass flow enthalpy, $h_{Bypass}$, of the portion of inlet steam;

determine an inlet bypass flow rate, $Q_{Bypass}$, of the portion of inlet steam;

determine a flow rate, $Q_{Mix}$, of the mixed flow; and

determine the exhaust enthalpy, $h_{Exhaust}$, using the relationship

$$h_{Exhaust} = \frac{\left(Q_{Mix} * h_{Mix}\right) - \left(Q_{Bypass} * h_{Bypass}\right)}{Q_{Mix} - Q_{Bypass}}.$$

13. The computer program product of the preceding claim, wherein to determine at least one of the inlet bypass flow enthalpy or the mixed flow enthalpy, the computing device is further configured to measure temperature and pressure of the respective flow.

**Patentansprüche**

1. Dampfturbinen (210)-Leistungstestsystem (260), umfassend:

eine Abgas-Bypassleitung (264), die zur selektiven Fluidverbindung mit einem Abgas (230) der Dampfturbine (210) angeordnet ist, wobei die Abgas-Bypassleitung angeordnet ist, um einen Teil eines Abgases der Dampfturbine als eine Abgas-Bypassströmung aufzunehmen;

eine Einlass-Bypassleitung (262), die zur selektiven Fluidverbindung mit einem Einlass (220) der Dampfturbine angeordnet ist, wobei die Einlass-Bypassleitung angeordnet ist, um einen Teil einer Einlassdampfströmung der Dampfturbine als eine Einlass-Bypassströmung aufzunehmen;

mindestens eine Einlass-Messstation und eine Einlass-Bypass-Messstation;

eine Mischströmungsleitung (266) mit einem Mischpunkt (267) an einem Ende in Fluidverbindung mit der Abgas-Bypassleitung und der Einlass-Bypassleitung, wobei der Mischpunkt und die Mischströmungsleitung angeordnet sind, um als Reaktion darauf, dass die Abgas-Bypassströmung und die Einlass-Bypassströmung in die Mischströmungsleitung durch den Mischpunkt eintreten, eine Mischströmung zu bilden; und

eine Mischströmungs-Messstation (280) zum Messen eines Mischströmungsdrucks $P_{Mix}$, einer Mischströmungstemperatur $T_{Mix}$ und einer Mischströmungsrate $Q_{Mix}$;

**dadurch gekennzeichnet, dass** ein Mischströmungs-Temperatursteuerblock (314) bereitgestellt ist, um sicherzustellen, dass die Temperatur der Mischströmung $T_{Mix}$ größer als eine Sättigungstemperatur $T_{Sat}$ für den Mischströmungsdruck $P_{Mix}$ ist, durch Einstellen der Einlass-Bypassströmung und/oder Einstellen der Abgas-Bypassströmung, wobei der Mischströmungs-Temperatursteuerblock konfiguriert ist, um das Erwärmen der Abgasdampfprobe einzustellen, wenn die Temperatur der Mischströmung $T_{Mix}$ kleiner oder gleich der Sättigungstemperatur $T_{Sat}$ ist, wie durch Einstellen von mindestens der Einlass-Bypassströmung und/oder der Abgas-Bypassströmung.

2. Dampfturbinen-Leistungstestsystem (210) nach Anspruch 1, weiter umfassend:

eine Computervorrichtung, wobei die Computervorrichtung zum Kommunizieren mit und zum Empfangen von mindestens einer gemessenen Eigenschaft von mindestens einer Messstation (240, 270), die zum Messen mindestens einer Eigenschaft der Einlass-Bypassströmung eingesetzt wird, und mit der Mischströmung-Messstation (280), die zum Messen mindestens einer Eigenschaft der Mischströmung eingesetzt wird, dient, wobei die Computervorrichtung konfiguriert ist, um eine Abgasenthalpie der Dampfturbine (210) basierend mindestens teilweise auf einer Wärmebilanz über dem Mischpunkt (267) unter Verwendung mindestens einer gemessenen Eigenschaft von den Messstationen, einer ersten Seite der Wärmebilanz, welche die mindestens eine Eigenschaft der Einlass-Bypassströmung aufweist, und einer zweiten Seite der Wärmebilanz, welche die mindestens eine Eigenschaft der Mischströmung aufweist, zu bestimmen.

3. Dampfturbinen-Leistungstestsystem (260) nach dem vorstehenden Anspruch 2, wobei die Computervorrichtung weiter ausgelegt und konfiguriert ist, um eine Leistungseigenschaft der Dampfturbine (210) unter Verwendung des Abgasenthalpiewerts zu bestimmen.

4. Dampfturbinen-Leistungstestsystem (260) nach einem der Ansprüche 2 oder 3, wobei die mindestens eine Eigenschaft mindestens eines von Strömungsrate, Druck oder Temperatur aufweist.

5. Dampfturbinen-Testsystem (260) nach einem der vorstehenden Ansprüche, umfassend ein Einlass-Bypassventil (261), das in der Einlass-Bypassleitung (262) bereitgestellt ist, und ein Auslass-Bypassventil (269), das in der Abgas-Bypassleitung (264) bereitgestellt ist, wobei die Bypassventile zum Steuern des selektiven Durchgangs durch die Einlass-Bypassleitung und die Abgas-Bypassleitung bereitgestellt und konfiguriert sind.

6. Verfahren zum Betreiben des Leistungstestsystems (260) nach einem der vorstehenden Ansprüche, wobei das Verfahren umfasst

Umleiten einer Abgasdampfprobe (230) durch die Abgas-Bypassleitung,

Umleiten einer Einlassdampfprobe (220) durch die Einlass-Bypassleitung (262),

Mischen der Abgasdampfprobe und der Einlassdampfprobe an einem Mischpunkt (267) einer Bypassleitung (266), dadurch Bereitstellen einer Mischströmung in der Bypassleitung und

Messen eines Mischströmungsdrucks $P_{Mix}$, einer Mischströmungstemperatur $T_{Mix}$ und einer Mischströmungsrate $Q_{Mix}$;

**dadurch gekennzeichnet, dass** sichergestellt wird, dass die Temperatur der Mischströmung $T_{Mix}$ größer als eine Sättigungstemperatur $T_{Sat}$ für den Mischströmungsdruck $P_{Mix}$ durch Einstellen der Einlass-Bypassströmung und/oder Einstellen der Abgas-Bypassströmung ist.

7. Verfahren nach dem vorstehenden Anspruch, **dadurch gekennzeichnet, dass** eine Computervorrichtung mindestens eine gemessene Eigenschaft von mindestens einer Messstation (240, 270), die zum Messen mindestens einer Eigenschaft der Einlass-Bypassströmung eingesetzt wird, und der Mischströmung-Messstation (280), die zum Messen mindestens einer Eigenschaft der Mischströmung eingesetzt wird, empfängt und die Computervorrichtung weiter eine Abgasenthalpie der Dampfturbine (210) basierend mindestens teilweise auf einer Wärmebilanz über dem Mischpunkt (267) unter Verwendung mindestens einer gemessenen Eigenschaft von den Messstationen bestimmt, wobei eine erste Seite der Wärmebilanz die mindestens eine Eigenschaft der Einlass-Bypassströmung aufweist, und eine zweite Seite der Wärmebilanz die mindestens eine Eigenschaft der Mischströmung aufweist.

8. Verfahren nach dem vorstehenden Anspruch, wobei die Computervorrichtung die Abgasenthalpie der Turbine gemäß der folgenden Gleichung bestimmt

$$h_{Exhaust} = \frac{(Q_{Mix} * h_{Mix}) - (Q_{Bypass} * h_{Bypass})}{Q_{Mix} - Q_{Bypass}}$$

wobei $h_{Mix}$ die Enthalpie der Mischströmung ist, $h_{Bypass}$ die Enthalpie der Einlass-Bypassströmung ist, $Q_{Mix}$ die Strömungsrate der Mischströmung ist und $Q_{Bypass}$ die Strömungsrate der Einlass-Bypassströmung ist.

9. Verfahren nach dem vorstehenden Anspruch, wobei die Computervorrichtung eine Effizienz der Turbine berechnet und die Effizienz gemäß der folgenden Gleichung bestimmt wird

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

wobei $h_{Inlet} = f(P_{Inlet}, T_{Inlet})$, die Einlassmessstation, mindestens einen Einlassdruck $P_{Inlet}$ und eine Einlasstemperatur $T_{Inlet}$ misst und die Abgasmessstation mindestens einen Abgasdruck $P_{Exhaust}$ misst.

10. Dampfturbine (210), umfassend:

eine Turbine, aufweisend einen Einlass (220) und einen Auslass (230), wobei der Einlass zur Verbindung mit einer Dampfversorgung angeordnet ist;
eine Einlassmessstation (240), die zum Messen einer Eigenschaft in dem Einlass angeordnet ist;
eine Abgasmessstation (250), die zum Messen einer Eigenschaft in dem Abgas angeordnet ist;
einen Einlass-Bypassanschluss an einem Einlassende der Turbine; und
einen Abgas-Bypassanschluss an einem Abgasende der Turbine;
**dadurch gekennzeichnet, dass** sie weiter ein Dampfturbinen-Leistungstestsystem (260) nach einem der vorstehenden Ansprüche umfasst, das ein Dampfturbinen-Leistungstestsystem beansprucht;
wobei die Einlass-Bypassleitung (262) des Leistungstestsystems (260) in Fluidverbindung mit dem Einlass-Bypassanschluss steht und angeordnet ist, um selektiv zuzulassen, dass Einlassdampf in die Einlass-Bypassleitung eintritt, um eine Einlass-Bypassströmung zu bilden;
wobei die Abgas-Bypassleitung (264) des Leistungstestsystems (260) in selektiver Fluidverbindung mit dem Abgas-Bypassanschluss steht und angeordnet ist, um selektiv zu ermöglichen, dass Abgasdampf von dem Abgas in die Abgas-Bypassleitung strömt, um eine Abgas-Bypassströmung zu bilden;
und weiter umfassend eine Computervorrichtung in Kommunikation mit und zum Empfangen von Messungen von mindestens der Einlass-Bypass-Messstation (270) des Leistungstestsystems (260) und der Mischströmung-Messstation (280) des Leistungstestsystems (260), wobei die Computervorrichtung ausgelegt ist, um eine Abgasenthalpie der Dampfturbine basierend mindestens zum Teil auf Messungen zu bestimmen, die von den Messstationen empfangen werden.

11. Computerprogrammprodukt zum Ermöglichen eines Leistungstests einer Dampfturbine (210) nach Anspruch 10, wobei die Dampfturbine einen Einlass (220) und einen Auslass (230) aufweist, wobei das Computerprogrammprodukt Anweisungen in Form eines computerausführbaren Codes umfasst, der, wenn er ausgeführt wird, eine Computervorrichtung konfiguriert zum:

Bestimmen mindestens einer Enthalpie $h_{Mix}$ einer Mischströmung, die aus dem Erwärmen eines Teils des Abgasdampfes aus dem Abgas mit einem Teil des Einlassdampfes von dem Einlass an einem Mischpunkt (267) gebildet wird;
Bestimmen mindestens einer Enthalpie $h_{Inlet}$ des Teils des Einlassdampfes; Erstellen einer Wärmebilanz zwischen der Mischströmung auf einer Seite des Mischpunkts und des Teils des Abgasdampfes und des Teils des Einlassdampfes auf der anderen Seite des Mischpunkts; und
Bestimmen einer Abgasenthalpie $h_{Exhaust}$ des Abgasdampfes basierend auf mindestens zum Teil der Wärmebilanz und weiter Sicherstellen, dass die Temperatur der Mischströmung $T_{Mix}$ größer als eine Sättigungstemperatur $T_{Sat}$ für den Mischströmungsdruck $P_{Mix}$ durch Einstellen der Einlass-Bypassströmung und/oder Einstellen der Abgas-Bypassströmung ist.

**12.** Computerprogrammprodukt nach dem vorstehenden Anspruch, wobei, um die Wärmebilanz herzustellen, die Computervorrichtung weiter konfiguriert ist zum:

Bestimmen einer Einlass-Bypassenthalpie $h_{Bypass}$ des Teils des Einlassdampfes;
Bestimmen einer Einlass-Bypass-Strömungsrate $Q_{Bypass}$ des Teils des Einlassdampfes;
Bestimmen einer Strömungsrate $Q_{Mix}$ der Mischströmung; und
Bestimmen der Abgasenthalpie $h_{Exhaust}$ unter Verwendung der Gleichung

$$h_{Exhaust} = \frac{(Q_{Mix} * h_{Mix}) - (Q_{Bypass} * h_{Bypass})}{Q_{Mix} - Q_{Bypass}}.$$

**13.** Computerprogrammprodukt nach dem vorstehenden Anspruch, wobei zum Bestimmen von mindestens einer von Einlass-Bypass-Strömungsenthalpie oder der Mischströmungsenthalpie die Computervorrichtung weiter zum Messen der Temperatur und des Drucks der zugehörigen Strömung konfiguriert ist.

**Revendications**

**1.** Système d'essai de performance (260) de turbine à vapeur (210) comprenant :

un conduit de dérivation d'échappement (264) agencé pour une communication fluidique sélective avec un échappement (230) de la turbine à vapeur (210), le conduit de dérivation d'échappement étant agencé pour recevoir une partie d'un échappement de la turbine à vapeur sous forme d'écoulement de dérivation d'échappement ;
un conduit de dérivation d'entrée (262) agencé pour une communication fluidique sélective avec une entrée (220) de la turbine à vapeur, le conduit de dérivation d'entrée étant agencé pour recevoir une partie d'un écoulement de vapeur d'entrée de la turbine à vapeur en tant qu'écoulement de dérivation d'entrée ;
au moins l'une d'une station de mesure d'entrée et d'une station de mesure de dérivation d'entrée ;
un conduit d'écoulement mixte (266) ayant un point de mélange (267) à une extrémité en communication fluidique avec le conduit de dérivation d'échappement et le conduit de dérivation d'entrée, le point de mélange et le conduit d'écoulement mixte étant agencés pour former un écoulement mixte sensible à l'écoulement de dérivation d'échappement et à l'écoulement de dérivation d'entrée pénétrant dans le conduit d'écoulement mixte à travers le point de mélange ; et
une station de mesure d'écoulement mixte (280) pour mesurer une pression d'écoulement mixte $P_{Mix}$, une température d'écoulement mixte $T_{Mix}$ et un débit mixte $Q_{Mix}$ ;
**caractérisé en ce qu'**un bloc de commande de température d'écoulement mixte (314) est fourni pour s'assurer que la température de l'écoulement mixte $T_{Mix}$ soit supérieure à une température de saturation $T_{Sat}$ pour la pression d'écoulement mixte $P_{Mix}$ en ajustant l'écoulement de dérivation d'entrée et/ou en ajustant l'écoulement de dérivation d'échappement, dans lequel le bloc de commande de température d'écoulement mixte est configuré pour ajuster le chauffage de l'échantillon de vapeur d'échappement si la température de l'écoulement mixte $T_{Mix}$ est inférieure ou égale à la température de saturation $T_{Sat}$ notamment en ajustant au moins l'un de l'écoulement de dérivation d'entrée et/ou de l'écoulement de dérivation d'échappement.

**2.** Système d'essai de performance de turbine à vapeur (210) selon la revendication 1, comprenant en outre :

un dispositif de calcul, dans lequel le dispositif de calcul est en communication avec au moins une caractéristique mesurée et pour recevoir celle-ci d'au moins une station de mesure (240, 270) déployée pour mesurer au moins une caractéristique de l'écoulement de dérivation d'entrée et avec la station de mesure d'écoulement mixte (280) déployée pour mesurer au moins une caractéristique de l'écoulement mixte,
dans lequel le dispositif de calcul est configuré pour déterminer une enthalpie d'échappement de la turbine à vapeur (210) sur la base au moins en partie d'un bilan thermique en travers du point de mélange (267) en utilisant au moins une caractéristique mesurée venant des stations de mesure, un premier côté du bilan thermique comprenant la au moins une caractéristique de l'écoulement de dérivation d'entrée et un second côté du bilan thermique comprenant la au moins une caractéristique de l'écoulement mixte.

**3.** Système d'essai de performance de turbine à vapeur (260) selon la revendication précédente 2, dans lequel le dispositif de calcul est en outre adapté et configuré pour déterminer une caractéristique de performance de la turbine à vapeur (210) en utilisant la valeur d'enthalpie d'échappement.

**4.** Système d'essai de performance de turbine à vapeur (260) selon l'une quelconque des revendications 2 ou 3, dans lequel la au moins une caractéristique comprend au moins l'un(e) d'un débit, d'une pression ou d'une température.

**5.** Système d'essai de turbine à vapeur (260) selon l'une quelconque des revendications précédentes, comprenant une soupape de dérivation d'entrée (261) disposée dans le conduit de dérivation d'entrée (262) et une soupape de dérivation de sortie (269) disposée dans le conduit de dérivation d'échappement (264), les soupapes de dérivation étant disposées et configurées pour commander le passage sélectif de vapeur à travers le conduit de dérivation d'entrée et le conduit de dérivation d'échappement.

**6.** Procédé de fonctionnement du système d'essai de performance (260) selon l'une quelconque des revendications précédentes, le procédé comprenant
la dérivation d'un échantillon de vapeur d'échappement (230) à travers le conduit de dérivation d'échappement,
la dérivation d'un échantillon de vapeur d'entrée (220) à travers le conduit de dérivation d'entrée (262),
le mélange de l'échantillon de vapeur d'échappement et de l'échantillon de vapeur d'entrée en un point de mélange (267) d'un conduit de dérivation (266), fournissant ainsi un écoulement mixte dans le conduit de dérivation, et
la mesure d'une pression d'écoulement mixte $P_{Mix}$, d'une température d'écoulement mixte $T_{Mix}$ et d'un débit mixte $Q_{Mix}$ ;
**caractérisé en ce que** l'on s'assure que la température de l'écoulement mixte $T_{Mix}$ est supérieure à une température de saturation $T_{Sat}$ pour la pression d'écoulement mixte $P_{Mix}$ en ajoutant l'écoulement de dérivation d'entrée et/ou en ajustant l'écoulement de dérivation d'échappement.

**7.** Procédé selon la revendication précédente, **caractérisé en ce qu'**un dispositif de calcul reçoit au moins une caractéristique mesurée d'au moins une station de mesure (240, 270) déployée pour mesurer au moins une caractéristique de l'écoulement de dérivation d'entrée et de la station de mesure d'écoulement mixte (280) déployée pour mesurer au moins une caractéristique de l'écoulement mixte, et le dispositif de calcul détermine en outre une enthalpie d'échappement de la turbine à vapeur (210) sur la base au moins en partie d'un bilan thermique en travers du point de mélange (267) en utilisant au moins une caractéristique mesurée provenant des stations de mesure, un premier côté du bilan thermique comprenant la au moins une caractéristique de l'écoulement de dérivation d'entrée et un second côté du bilan thermique comprenant la au moins une caractéristique de l'écoulement mixte.

**8.** Procédé selon la revendication précédente, dans lequel le dispositif de calcul détermine l'enthalpie d'échappement de la turbine selon la relation :

$$h_{Exhaust} = \frac{(Q_{Mix} * h_{Mix}) - (Q_{Bypass} * h_{Bypass})}{Q_{Mix} - Q_{Bypass}}$$

où $h_{Mix}$ est l'enthalpie de l'écoulement mixte, $h_{Bypass}$ est l'enthalpie de l'écoulement de dérivation d'entrée, $Q_{Mix}$ est le débit de l'écoulement mixte et $Q_{Bypass}$ est le débit de l'écoulement de dérivation d'entrée.

**9.** Procédé selon la revendication précédente, dans lequel le dispositif de calcul calcule le rendement de la turbine et le rendement est déterminé selon la relation

$$\eta = \frac{h_{Inlet} - h_{Exhaust}}{h_{Inlet} - h_{ps}\left(P_{Exhaust}, s_{Inlet}\left(P_{Inlet}, h_{Inlet}\right)\right)},$$

dans laquelle $h_{Inlet} = f(P_{Inlet}, T_{Inlet})$, la station de mesure d'entrée mesure au moins une pression d'entrée $P_{Inlet}$ et une température d'entrée $T_{Inlet}$ et la station de mesure d'échappement mesure au moins une pression d'échappement PExhaust.

**10.** Turbine à vapeur (210) comprenant :

une turbine ayant une entrée (220) et un échappement (230), l'entrée étant agencée pour un raccordement à une fourniture de vapeur ;
une station de mesure d'entrée (240) agencée pour mesurer une caractéristique à l'entrée ;
une station de mesure d'échappement (250) agencée pour mesurer une caractéristique à l'échappement ;
un orifice de dérivation d'entrée à une extrémité d'entrée de la turbine ; et
un orifice de dérivation d'échappement à une extrémité d'échappement de la turbine ;
**caractérisée en ce qu'**elle comprend en outre un système d'essai de performance de turbine à vapeur (260) selon l'une quelconque des revendications précédentes revendiquant un système d'essai de performance de turbine à vapeur ;
dans laquelle le conduit de dérivation d'entrée (262) du système d'essai de performance (260) est en communication fluidique avec l'orifice de dérivation d'entrée et agencé pour permettre sélectivement à la vapeur d'entrée de pénétrer dans le conduit de dérivation d'entrée pour former un écoulement de dérivation d'entrée ;
dans laquelle le conduit de dérivation d'échappement (264) du système d'essai de performance (260) est en communication fluidique sélective avec l'orifice de dérivation d'échappement et agencé pour permettre sélectivement à la vapeur d'échappement de passer de l'échappement dans le conduit de dérivation d'échappement pour former un écoulement de dérivation d'échappement ;
et **en ce qu'**elle comprend en outre un dispositif de calcul en communication et recevant des mesures d'au moins la station de mesure de dérivation d'entrée (270) du système d'essai de performance (260) et de la station de mesure d'écoulement mixte (280) du système d'essai de performance (260), le dispositif de calcul étant agencé pour déterminer une enthalpie d'échappement de la turbine à vapeur sur la base au moins en partie de mesures reçues des stations de mesure.

**11.** Produit de programme informatique pour permettre des essais de performance d'une turbine à vapeur (210) selon la revendication 10,
la turbine à vapeur ayant une entrée (220) et un échappement (230), le produit de programme informatique comprenant des instructions sous la forme d'un code exécutable par ordinateur qui, lorsqu'il est exécuté, configure un dispositif informatique pour :

déterminer au moins une enthalpie $h_{Mix}$ d'un écoulement mixte formé à partir du chauffage d'une partie de vapeur d'échappement venant de l'échappement avec une partie de vapeur d'entrée venant de l'entrée en un point de mélange (267) ;
déterminer au moins une enthalpie $h_{Inlet}$ de la partie de la vapeur d'entrée ;
établir un bilan thermique entre l'écoulement mixte d'un côté du point de mélange et la partie de vapeur d'échappement et la partie de vapeur d'entrée d'un autre côté du point de mélange ; et
déterminer une enthalpie d'échappement $h_{Exhaust}$ de la vapeur d'échappement sur la base au moins en partie du bilan thermique et s'assurer en outre que la température de l'écoulement mixte $T_{Mix}$ est supérieure à une température de saturation $T_{Sat}$ pour la pression d'écoulement mixte $P_{Mix}$ en ajustant l'écoulement de dérivation d'entrée et/ou en ajustant l'écoulement d'échappement.

**12.** Produit de programme informatique selon la revendication précédente, dans lequel, pour établir le bilan thermique, le dispositif informatique est en outre configuré pour :

déterminer une enthalpie d'écoulement de dérivation d'entrée $h_{Bypass}$ de la partie de vapeur d'entrée ;
déterminer un débit de dérivation d'entrée $Q_{Bypass}$ de la partie de vapeur d'entrée ;
déterminer un débit $Q_{Mix}$ de l'écoulement mixte ; et
déterminer l'enthalpie d'échappement $h_{Exhaust}$ en utilisant la relation

$$h_{Exhaust} = \frac{\left(Q_{Mix} * h_{Mix}\right) - \left(Q_{Bypass} * h_{Bypass}\right)}{Q_{Mix} - Q_{Bypass}}.$$

**13.** Produit de programme informatique de la revendication précédente, dans lequel, pour déterminer au moins l'une de l'enthalpie d'écoulement de dérivation d'entrée ou de l'enthalpie d'écoulement mixte, le dispositif informatique est en outre configuré pour mesurer la température et la pression de l'écoulement respectif.

PRIOR ART

FIG. 1

FIG. 2

EP 2 717 033 B1

FIG. 3

Start

**Prepare turbine/rig** — 401

Shut down turbine (section) to be tested — 402

Attach test rig
(inlet bypass conduit, exhaust conduit) — 404

Engage turbine (section) to be tested — 406

Heat exhaust steam sample with inlet/supply steam sample — 403

**Gather/determine flow properties/characteristics** — 405

Measure inlet characteristic(s)
(pressure $P_{Inlet}$, temperature $T_{Inlet}$) — 408

Measure inlet bypass characteristic(s)
(pressure $P_{Bypass}$, temperature $T_{Bypass}$, flow rate $Q_{Bypass}$) — 410

Measure exhaust characteristic(s)
(pressure $P_{Exhaust}$, temperature $T_{Exhaust}$) — 412

Measure mixed flow characteristic(s)
(pressure $P_{Mix}$, temperature $T_{Mix}$, flow rate $Q_{Mix}$) — 414

409 — $T_{Mix} > T_{Sat}$?

No → Adjust sample/flow rate

Yes

**Heat balance across mixing point to determine exhaust enthalpy** — 407

Determine inlet enthalpy $h_{Inlet}$ — 416

Determine inlet bypass enthalpy $h_{Bypass}$ — 418

Determine mixed flow enthalpy $h_{Mix}$ — 420

Determine exhaust enthalpy

$$h_{Exhaust} = \frac{(Q_{Mix} * h_{Mix}) - (Q_{Bypass} * h_{Bypass})}{Q_{Mix} - Q_{Bypass}}$$ — 422

Determine estimated efficiency $\eta$ of steam turbine section

$$\eta = \frac{h_{Inlet} - h_{Exhaust}}{h_{Inlet} - hps(P_{Exhaust}, sph(P_{Inlet}, h_{Inlet}))}$$ — 424

Shut down turbine
(section) to be tested — 426

Remove test rig
(inlet bypass conduit, exhaust conduit) — 428

Stop

400

FIG. 4

500

Comm. Arr.
530

Computer System
510

PU
512

517

I/O
514

Storage component  516

Exhaust Enthalpy/Performance Test Program
520

522

518

FIG. 5

EP 2 717 033 B1

**EP 2 717 033 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6643605 B